# EUROPEAN PATENT SPECIFICATION

(11) **EP 2 021 215 B1**
(45) Date of publication and mention of the grant of the patent: **07.03.2012**
(21) Application number: 07748426.9
(22) Date of filing: 24.04.2007
(51) Int. Cl.: B60T 7/12, B60T 8/00, B60T 8/171, B60T 8/58, B60T 13/66, B60T 13/74

(54) **OPERATION CONTROL SYSTEM**
BETRIEBSSTEUERSYSTEM
SYSTÈME DE COMMANDE D'OPÉRATION

(30) Priority: 26.05.2006 SE 0601166
(43) Date of publication of application: 11.02.2009
(73) Proprietor: Scania CV AB (PUBL), 151 87 Södertälje (SE)
(72) Inventor: FRANSSON, Håkan, 640 50 Björnlunda (SE); BOSTRÖM, Richard, 155 30 Nykvarn (SE)
(74) Representative: Waldebäck, Hans Olov
(86) International application number: PCT/SE2007/050265
(87) International publication number: WO 2007/139482

(56) References cited:
- EP-A1- 0 392 732
- EP-A1- 1 359 336
- EP-A2- 1 327 553
- EP-A2- 1 375 278
- EP-A2- 1 375 278
- WO-A1-02/08012
- WO-A1-02/08012
- WO-A1-2004/067309
- DE-A1- 19 954 807
- FR-A1- 2 833 542

## Description

### TECHNICAL FIELD

The present invention relates to a system for controlling an operation of slowly manoeuvring of a motor vehicle provided with an engine, a gearbox associated with the engine, an accelerator member adapted to be actuated for requesting a torque to be transmitted from an output shaft of said gearbox to a driving shaft of the vehicle, and a braking device for applying a braking action to at least one wheel axle of the vehicle. The invention also relates to a method for controlling an operation of slowly manoeuvring of a motor vehicle. Furthermore, the invention relates to a computer program comprising computer program code for implementing such a method, a computer program product comprising a data storage medium readable by an electronic control unit and having said computer program stored thereon, and an electronic control unit. Such a system and method is disclosed, for example in the prior art document WO 02/08012 A1.

### BACKGROUND ART

The present invention is applicable to all types of wheeled motor vehicles, especially heavy motor vehicles such as lorries, towing vehicles and buses. The invention is especially applicable to heavy motor vehicles having an automatic transmission gearbox, and the operation of slowly manoeuvring of such a motor vehicle will for that sake be described hereinafter for illuminating but not in any way restricting the invention thereto.

Such operations of slowly manoeuvring of a motor vehicle of this type may typically be carried out in connection with loading and unloading, parking, moving the vehicle on a ferry etc. It is in such an operation of slowly manoeuvring of the motor vehicle important that this slowly manoeuvring may take place with a high accuracy for not moving the motor vehicle further than desired. It may here be a question of moving slowly forwards as well as rearwards. When a motor vehicle provided with an automated mechanical transmission (AMT) as gearbox standing still is to be moved slowly the driver actuates the accelerator member, such as an accelerator pedal. The position of this accelerator member decides the magnitude of the torque to be transmitted from the output shaft of the gearbox to the drive shaft of the vehicle. If in such a case the lowest torque possible to be delivered by said automatic transmission gearbox is too high, there is a risk that the motor vehicle jumps in the intended driving direction, which means that it moves further in the driving direction than intended. This means that it will be very tricky to carry out an operation of slowly manoeuvring of such a motor vehicle with a high accuracy, and the problem will be more accentuated when the vehicle is light with respect to said lowest torque, which may be transmitted from said output shaft of the gearbox to a drive shaft of the vehicle, i.e. in the case of a heavy motor vehicle when this is without load or only slightly loaded.

### DISCLOSURE OF THE INVENTION

The object of the present invention is to provide a system for controlling an operation of slowly manoeuvring of a motor vehicle, by means of which the above-indicated problem may be reduced.

This object is according to the invention obtained by providing a system of the type according to the introduction, which comprises a first sensor adapted to sense whether a gear of said gearbox has been selected or not, a second sensor adapted to detect the actual position of said accelerator member, means adapted to determine said torque requested by said accelerator member and a braking control means adapted to automatically control said braking device to apply a weak braking action to at least one wheel axle of the vehicle when said first and second sensor and said torque determining means indicate that:
- said torque requested by the accelerator member is below a predetermined level (E), and that at least one of the following two conditions is fulfilled:
- a lowest gear, reverse gear or a low range of said gearbox is selected, and
- the accelerator member is actuated,
and to automatically control said braking device to interrupt said weak braking action when at least one of the following four conditions is fulfilled:
- no gear of the gearbox is selected,
- said accelerator member has been unactuated for a predetermined time,
- said torque requested by said accelerator member exceeds said predetermined level (E) and
- the speed of the vehicle exceeds a predetermined level being lower than 10 km/h, advantageously lower than 7 km/h, and preferably 4 km/h - 7 km/h.

By applying such a weak braking action when said conditions first mentioned are fulfilled and interrupting the braking action when any of the conditions last mentioned are fulfilled it will be much easier to slowly manoeuvring the motor vehicle with a high accuracy than without such a weak braking action. It will be easier to carry out fine regulation of the movement of the vehicle when driving slowly, and it will be possible to move the vehicle a very short distance, such as in the order of a few centimetres, with a high accuracy, since there is no risk of occurrence of said jumps when the vehicle starts to move and the vehicle will stop nearly "at the spot" when the driver stops to actuate the accelerator member. Thus, weak braking action is a braking action enabling such a substantially immediate stop by solely stop to actuate the accelerator member when driving slowly on a horizontal ground but not being substantially stronger than necessary for obtaining this. "No gear of the gearbox is selected" is for the case of an automated mechanical transmission gearbox the same as the shift lever, knob or other shift actuating member is in Neutral. By interrupting said weak braking action when said accelerator member has been unactuated for a predetermined time it is ensured that the motor vehicle may roll forwards/rearwards if desired. By interrupting said weak braking action when the torque requested by the accelerator member exceeds a predetermined level it is avoided that braking is taking place and unnecessary wear is applied to the clutch of the gearbox, for instance when there is no desire to manoeuvre the motor vehicle slowly but only to drive away or the motor vehicle is so heavily loaded that an operation of slowly manoeuvring of the motor vehicle may be carried out with a high accuracy without any said weak braking action applied to the vehicle. Determination of the torque requested by the accelerator member may take place in different ways, such as determining the amount fuel requested by detecting the position of the acceleration member.

According to the invention one of said two conditions is one of a) the lowest gear or a reverse gear of said gearbox is selected, and b) a certain range, such as a low range, of said gearbox is selected. This means that the weak braking action will not be applied as soon as any gear is selected, but only when a gear used to drive slowly is selected if the accelerator member is not actuated.

According to the invention the system is adapted for controlling an operation of slowly manoeuvring of a motor vehicle provided with a speed indicator, and said braking control means is adapted to automatically control said braking device to interrupt said weak braking action as soon as said speed indicator indicates that the speed of the vehicle exceeds a predetermined level being lower than 10 km/hour, advantageously lower than 7 km/hour and preferably 4 km/hour - 7 km/hour. "Speed indicator" is here to be interpreted broadly, and it may be any member delivering information from which the speed of the vehicle may be derived. This feature ensures that said weak braking action is interrupted as soon as it is clear that it is not needed, i.e. when there is actually no slowly manoeuvring taking place, so that wear on clutches, brake parts and the like may be minimized.

According to an embodiment of the invention said braking control means is adapted to apply a substantially constant weak braking action to said at least one wheel axle of the vehicle as long as said torque requested by the accelerator member is below a predetermined level (E) and at least one of said two conditions are fulfilled.

According to another embodiment of the invention said braking control means is adapted to control said braking device to automatically interrupt said weak braking action as soon as said torque requested exceeds a said predetermined level being lower than the level of said torque required for getting said vehicle to start to move when standing on horizontal ground and being fully loaded. It has been found out that there is in fact no real need of applying a said weak braking action to a vehicle being fully loaded, since there is for such a vehicle no real risk of occurrence of said jumps, and such a vehicle may mostly be accurately moved small distances without any said weak braking action. By selecting said predetermined level of the torque in this way the wear upon the clutch of the gearbox caused by the application of said weak braking action may be kept at an acceptably low level.

According to another embodiment of the invention the system further comprises means adapted to detect the actual total weight of the vehicle and deliver information thereabout to said braking control means, and said braking control means is adapted to only control said braking device to apply a said weak braking action to at least one wheel axle of the vehicle if the total weight of the vehicle is below a predetermined level being substantially higher than the weight of the vehicle in unloaded state and lower than the weight of said vehicle in fully loaded state. This means that it is ensured that said weak braking action is applied to the vehicle when it is unloaded or carries a low load, whereas said weak braking action is not applied to the vehicle when it is fully loaded.

According to another embodiment of the invention said braking control device is adapted to make the intensity of said weak braking action depending upon the total weight of the vehicle by making said braking action increase with decreasing weight of the vehicle. This means that said weak braking action will be stronger where it is mostly needed and weaker when the need thereof is lower, which further reduces the wear upon the clutch of the gearbox.

According to another embodiment of the invention the system is adapted to control an operation of slowly manoeuvring of a motor vehicle provided with an automated mechanical transmission as gearbox, and said first sensor is adapted to sense a position of a shift actuating member, such as a shift lever or a rotary knob or a rotary ring on a gear changing lever, of said gearbox. This means that the condition "a gear of said gearbox is selected" will be considered to be fulfilled if said actuating member is in any position used when moving the vehicle, and accordingly not in the position Neutral.

It may be mentioned that DE 10105749 A1 describes a system for controlling an operation of slowly manoeuvring of a motor vehicle, which however is much more complicated than the system according to the present invention and acts differently. A braking action is applied to the vehicle in question, but this braking action increases with the weight of the vehicle, so that it will be strongest where it according to the present invention may possibly not be needed at all. Furthermore, the braking action applied is as strongest when the accelerator member is not actuated, whereas the present invention provides a weak braking action only if the accelerator member is actuated. Furthermore, EP 1 447 261 A1 describes a braking control system applying a rather strong braking action to a vehicle to be started in an uphill slope, which controls the braking action to be reduced the more the more the accelerator pedal is pressed down.

The invention also relates to a method having the features defined in claim 7 for controlling an operation of slowly manoeuvring of a motor vehicle provided with an engine, a gearbox associated with the engine, an accelerator member adapted to be actuated for requesting a torque to be transmitted from an output shaft of said gearbox to a drive shaft of the vehicle, and a braking device for applying a braking action to at least one wheel axle of the vehicle.

The invention also relates to a computer program having the features defined in claim 13, a computer program product having the features defined in claim 17 and an electronic control unit having the features defined in claim 18.

### BRIEF DESCRIPTION OF THE DRAWINGS

The invention will in the following be more closely described by means of embodiment examples, with reference to the appended drawings, where:

Fig. 1 is a schematic outline diagram illustrating a system according to the present invention,

Fig. 2 is a graph of the number of revolutions of the drive shaft, the torque transmitted to the drive shaft and the position of the accelerator pedal of a known unloaded tractor with a trailer connected thereto when starting to move in an operation for slowly manoeuvring of the vehicle,

Fig. 3 is a graph corresponding to that according to Fig. 2 for a vehicle provided with a system for controlling an operation of slowly manoeuvring of the vehicle according to an embodiment of the present invention, and in which it is shown how said weak braking action is activated, which to the left shows what happens when an unloaded said vehicle in the form of a tractor with a trailer is moved slightly and to the right what is happening when the vehicle is controlled to gently start to move for driving,

Fig. 4 is a graph corresponding to the right part of Fig. 3 for a fully loaded said vehicle,

Fig. 5 is a schematic outline diagram of an electronic unit for implementing the method according to the invention, and

Fig. 6 is a flow diagram illustrating a method according to an embodiment of the invention.

### EMBODIMENTS OF THE PRESENT INVENTION

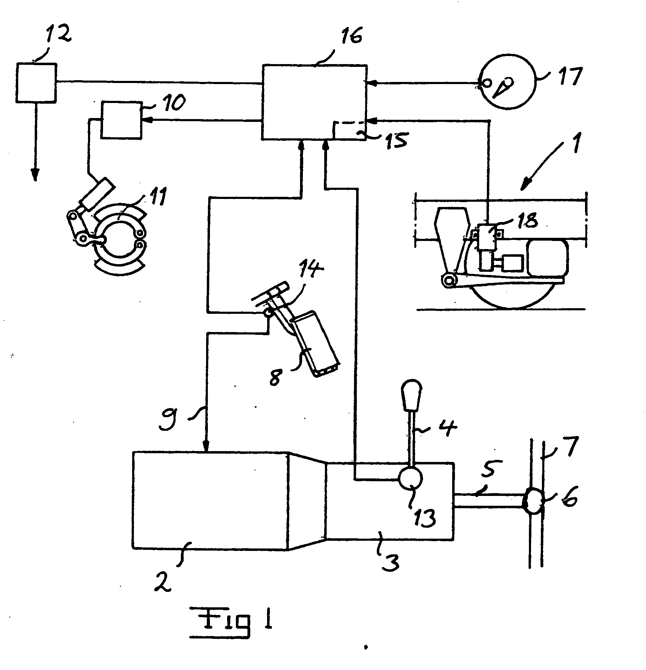

Parts of a motor vehicle 1 in the form of a truck, which is intended to have a trailer connected thereto, essential for explaining the present invention are very schematically shown in Fig. 1. The vehicle has an engine 2 and a gearbox 3, here in the form of an automated mechanical transmission (AMT) as gearbox, associated with the engine. The gearbox is provided with a shift actuating member in the form of a shift lever 4 associated with the gearbox through which different states of the gearbox may be selected, such as Neutral, Drive 1, Drive 2 and Reverse. The output shaft 5 of the gearbox is through a differential 6 connected to half shafts 7 of the vehicle.

The vehicle comprises also an accelerator member in the form of an accelerator pedal 8 adapted to be actuated for requesting a torque to be transmitted from said output shaft 5 of the gearbox to the drive shaft 7 by acting upon the engine 2 as indicated by the arrow 9.

The vehicle has also a braking device for applying a braking action to the vehicle, and this device comprises on one hand a service frictional braking device 10 adapted to control service brakes 11 applied on all wheel axles of the vehicle, and on the other an auxiliary braking device 12 adapted to control auxiliary brakes, such as a retarder brake and/or an exhaust brake, of the vehicle.

The vehicle is provided with a system for controlling an operation of slowly manoeuvring of the vehicle, and this system comprises a first sensor 13 adapted to sense whether a gear and possibly which gear or type of gears, such as range or split, of said gearbox has been detected or not, a second sensor 14 adapted to detect the actual position of the accelerator member 8 and means 15 adapted to determine the torque requested by the accelerator member 8. The two sensor members 13, 14 are connected to a braking control means 16 adapted to automatically control the braking device, preferably by controlling one or more service brakes 11 through the service frictional braking device 10, to apply a weak braking action to at least one wheel axle of the vehicle when said first and second sensors 13, 14 and said means 15 indicate that the torque requested by the accelerator member is below a predetermined level and at least one of the following two conditions are fulfilled: a certain gear or type of gear or any gear of said gearbox is selected, and the accelerator member is actuated. The torque requested by the accelerator member is determined by calculation and the means therefore may be included in the same unit as the braking control means 16, as indicated in Fig 1. Said braking control means is further adapted to automatically control the braking device to interrupt said weak braking action when at least one of the following conditions is fulfilled: no gear of the gearbox is selected, said accelerator member has been unactuated for a predetermined time and said torque requested by the accelerator member exceeds said predetermined level. Thebraking control means is adapted to apply a substantially constant weak braking action, i.e. which is on the same level when it is applied. Said predetermined level is set to be lower than the level of the said torque required for getting said vehicle to start to move when standing on horizontal ground and being fully loaded.

The vehicle is also provided with a speed indicator 17 adapted to send information about the actual speed of the vehicle to the braking control means 16, which is adapted to automatically control the braking device to interrupt said weak braking action as soon as the speed indicator 17 indicates that the speed of the vehicle exceeds a predetermined level, which is lower than 10 km/h, advantageously lower than 7 km/h, and preferably 4 km/h-7 km/h. 5 km/h is a suitable value for this speed level.

The system further comprises means 18 adapted to detect the actual total weight of the vehicle and deliver information thereabout to the braking control means 16. According to an embodiment of the invention said braking control means is adapted to only control the braking device to apply a said weak braking action to at least one wheel axle of the vehicle if the total weight of the vehicle is below a predetermined level being substantially higher than the weight of the vehicle in unloaded state and lower than the weight of the vehicle in fully loaded state, which avoids that such a weak braking action is applied to a fully loaded vehicle, for which an operation of slowly manoeuvring may be carried out with high accuracy without such a braking action. It is also within the scope of the invention, which constitutes another embodiment of the invention, to design the braking control device to make the intensity of said weak braking action depending upon the total weight of the vehicle by making said braking action increase with decreasing weight of the vehicle.

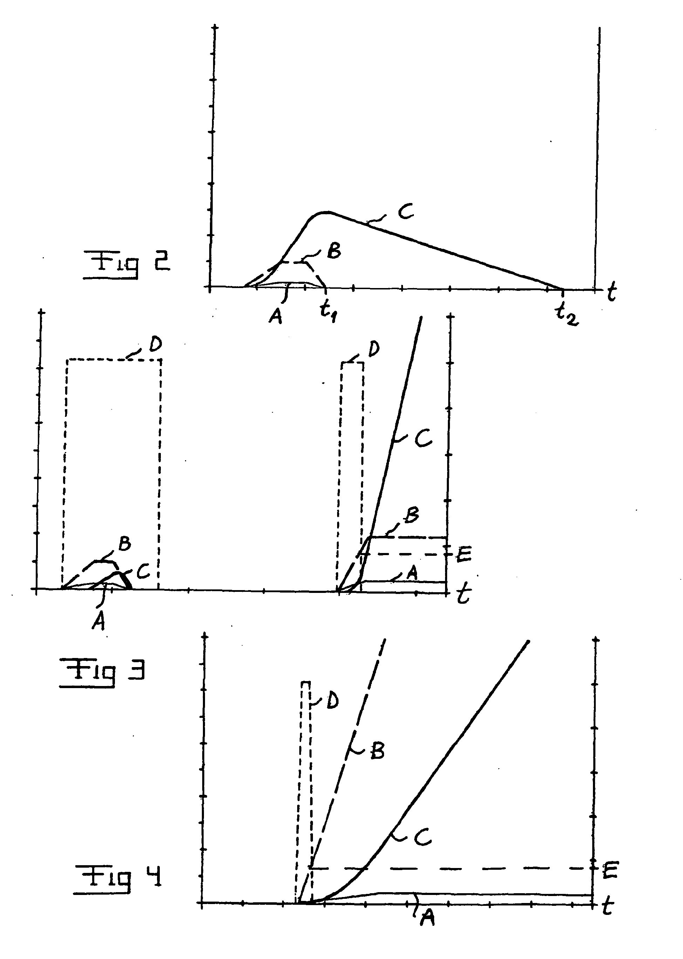

The function of the system for controlling an operation of slowly manoeuvring of a motor vehicle according to the invention will now be explained while making reference to Figs. 2-4. Fig. 2 shows what happens when trying to drive a short distance in an operation of slowly manoeuvring of an unloaded truck already known. The thin solid line A illustrates how much the accelerator member is moved from an unactuated position versus time t. The thick dashed line B illustrates the torque requested through actuation of the accelerator member versus time. The thick solid line C illustrates the number of revolutions of the drive shaft 7 of the vehicle versus time. It appears that the vehicle starts to move when the accelerator member has been moved to a certain extent and the torque requested has reached a certain level. The vehicle will then after removing the action upon the accelerator member and by that the torque requested thereby continue to move a considerable distance until the moment indicated by t₂, which may be a couple of seconds after the moments t₁ at which the action upon the accelerator member was removed.

Fig. 3 shows to the left what happens when the same vehicle being provided with a system for controlling an operation of slowly manoeuvring according to the present invention is controlled in the same way by actuating the accelerator member. It is indicated by the thin dashed line D that a constant weak braking action is applied to the vehicle when it is sensed that a gear of the gearbox is selected, i.e. the shift lever is for instance moved from Neutral to Drive, the accelerator member is actuated and the torque requested by the accelerator member is below a predetermined level. This weak braking action is interrupted when the accelerator member has been unactuated for a predetermined time. It appears that a higher requested torque B is necessary for making the vehicle to start to move, and the vehicle will stop to move substantially directly when the accelerator member is not actuated any longer.

It is shown to the right of Fig 3 what happens when the vehicle provided with system according to the invention is started for driving away. It is shown how the weak braking action D is first applied as soon as the acceleration member is actuated for a very gentle start of the movement of the vehicle and how this weak braking action is interrupted when the torque requested by the accelerator member exceeds a predetermined level E.

Fig 4 shows what happens when the vehicle according to Fig 3 is fully loaded, which may mean a total weight of for instance 40 tons for a tractor with trailer, and is started in the same way as indicated to the right in Fig 3. It is shown that the weak braking action is interrupted when the torque requested by the accelerator member exceeds the predetermined level E, which happens before the vehicle starts to move.

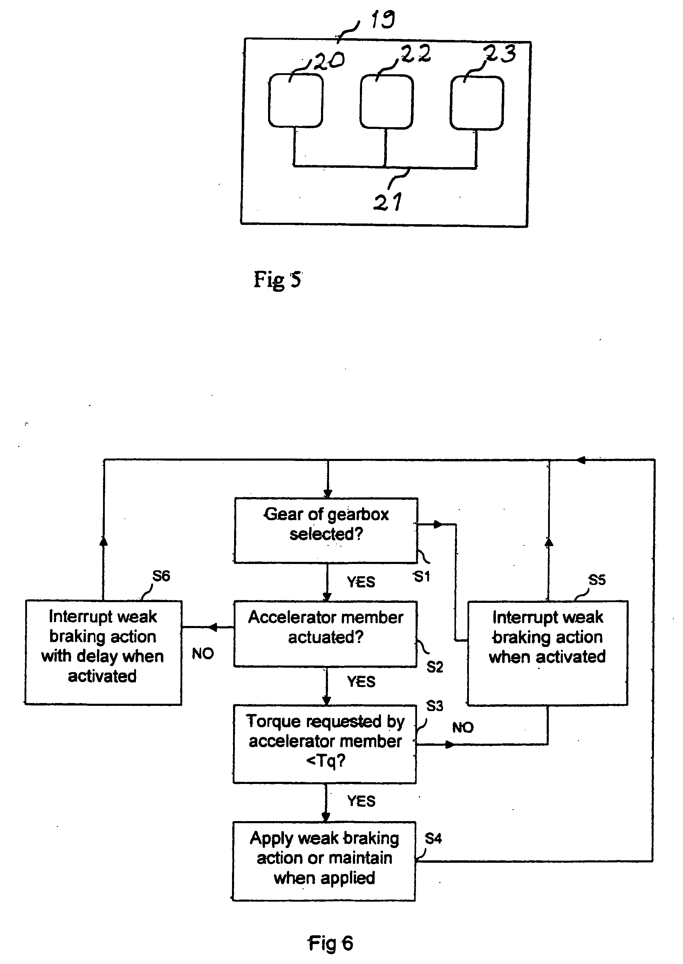

A flow diagram illustrating a method according to an embodiment of the invention is shown in Fig 6. In a first step S1, it is determined whether a gear of the gearbox is selected. When the answer to this question is yes it is in a second step S2 determined whether the accelerator member is actuated. When the answer to this question is yes it is in a third step S3 determined whether the torque requested by the accelerator member is below a predetermined level Tq. If the answer to this question is yes a weak braking action is applied to the vehicle in a fourth step S4. If the answer to the question in the step S1 is no said weak braking action is interrupted when activated in a fifth step S5. This step S5 is also carried out when the answer to the question in the step S3 is no. When the answer to the question in the step S2 is no said weak braking action is interrupted with delay when activated in a sixth step S6.

Computer program code for implementing a method according to the invention is suitably included in a computer program, which is loadable directly into the internal memory of a computer, such as the internal memory of a braking control unit, gearbox control unit or engine control unit of the vehicle. Such a computer program is suitably provided via a computer program product comprising a data storage medium readable by an electronic control unit, which data storage medium has the computer program stored thereon. Said data storage medium is for instance an optical data storage medium in the form of a CD-ROM disc, a DVD disc etc, a magnetic data storage medium in the form of a hard disc, a diskette, a cassette tape etc, or a memory of the type ROM, PROM, EPROM, EEPROM or a Flash memory.

The computer program according to an embodiment of the invention comprises computer program code for causing a computer, e.g. in the form of a micro processor of an electronic unit:

- to obtain sensing of whether a gear of said gearbox has been selected or not,
- to receive the actual position of said accelerator member,
- to determine said torque requested by said accelerator member, and
- to automatically control said braking device to apply a weak braking action to at least one wheel axle of the vehicle when
- said torque requested by the accelerator member is below a predetermined level, and at least one of the following two conditions is fulfilled:
- a certain gear or type of gear or any gear of said gearbox is selected, and
- the accelerator member is actuated, and
- to automatically control said braking device to interrupt said weak braking action when at least one of the following conditions is fulfilled:
- no gear of the gearbox is selected,
- said accelerator member has been unactuated for a predetermined time, and
- said torque requested by said accelerator member exceeds said predetermined level.

Fig 5 very schematically illustrates an electronic control unit 19 comprising an execution means 20, such as a central processing unit (CPU) for executing computer software. The execution means 20 communicates with a memory 22, for instance of the type RAM, via a data bus 21. The control unit 19 also comprises data storage medium 23, for instance in the form of at least one memory of the type ROM, PROM, EPROM or EEPROM or a Flash memory. The execution means 20 communicates with the data storage medium 23 via the data bus 21. The computer program comprising computer program for implementing a method according to the invention is stored on the data storage medium 23.

The invention is of course not in any way restricted to the embodiments described above. On the contrary, many possibilities to modifications thereof will be apparent to a person with ordinary skill in the art without departing from the basic idea of the invention as defined in the appended claims.

It is also possible to require that both said two conditions have to be fulfilled for applying said weak braking action.

## Claims

1. A system for controlling an operation of slowly manoeuvring of a motor vehicle provided with:
- an engine (2),
- a gearbox (3) associated with the engine,
- an accelerator member (8) adapted to be actuated for requesting a torque to be transmitted from an output shaft of said gearbox to a drive shaft of the vehicle,
- a braking device (10, 12) for applying a braking action to at least one wheel axle of the vehicle, and
- a speed indicator (17), **characterized in that** the system comprises a first sensor (13) adapted to sense whether a gear of said gearbox has been selected or not, a second sensor (14) adapted to detect the actual position of said accelerator member, means (15) adapted to determine said torque requested by said accelerator member and a braking control means (16) adapted to automatically control said braking device to apply a weak braking action to at least one wheel axle of the vehicle when said first and second sensor and said torque determining means indicate that
- said torque requested by the accelerator member is below a predetermined level (E), and that at least one of the following two conditions is fulfilled:
- a lowest gear, reverse gear or a low range of said gearbox is selected, and
- the accelerator member is actuated,
and to automatically control said braking device (10) to interrupt said weak braking action when at least one of the following four conditions is fulfilled:
- no gear of the gearbox (3) is selected,
- said accelerator member (8) has been unactuated for a predetermined time,
- said torque requested by said accelerator member exceeds said predetermined level (E). and
- the speed of the vehicle exceeds a predetermined level being lower than 10 km/h, advantageously lower than 7 km/h, and preferably 4 km/h - 7 km/h.

2. A system according to claim 1, characterized in thatsaid braking control means (16) is adapted to apply a substantially constant weak braking action to said at least one wheel axle of the vehicle as long as
- said torque requested by the accelerator member is below a predetermined level (E) and at least one of said two conditions is fulfilled.

3. A system according to any one of the preceding claims, **characterized in that** said braking control means (16) is adapted to control said braking device (10) to automatically interrupt said weak braking action as soon as said torque requested exceeds a said predetermined level (E) being lower than the level of a said torque required for getting said vehicle to start to move when standing on horizontal ground and being fully loaded.

4. A system according to any one of the preceding claims, **characterized in that** the system further comprises means (18) adapted to detect the actual total weight of the vehicle and deliver information thereabout to said braking control means (16), and that said braking control means is adapted to only control said braking device (10) to apply a said weak braking action to at least one wheel axle of the vehicle if the total weight of the vehicle is below a predetermined level being substantially higher than the weight of said vehicle in unloaded state and lower than the weight of said vehicle in fully loaded state.

5. A system according to claim 4, **characterized in that** said braking control means (16) is adapted to make the intensity of said weak braking action depending upon the total weight of the vehicle by making said braking action increase with decreasing weight of the vehicle.

6. A system according to any of the preceding claims, in which it is adapted for controlling the operation of slowly manoeuvring of a motor vehicle having an automated mechanical transmission (AMT) as gearbox, **characterized in that** said first sensor (13) is adapted to sense a position of a shift actuating member, such as a shift lever (4) or a knob, of said gearbox.

7. A method for controlling an operation of slowly manoeuvring of a motor vehicle provided with:
- an engine (2),
- a gearbox (3) associated with the engine,
- an accelerator member (8) adapted to be actuated for requesting a torque to be transmitted from an output shaft of said gearbox to a drive shaft of the vehicle,
- a braking device (10) for applying a braking action to at least one wheel axle of the vehicle, **characterized in that** the method comprises the steps of:
- sensing whether a gear of said gearbox has been selected or not,
- measuring the speed of the vehicle
- detecting the actual position of said accelerator member,
- determining said torque requested by said accelerator member, and
- automatically controlling said braking device (10) to apply a weak braking action to at least one wheel axle of the vehicle when
- said torque requested by the accelerator member is below a predetermined level (E), and at least one of the following two conditions is fulfilled:
- a lowest gear, reverse gear or a low range of said gearbox is selected, and
- the accelerator member is actuated, and
- automatically controlling said braking device (10) to interrupt said weak braking action when at least one of the following four conditions is fulfilled:
- no gear of the gearbox is selected,
- said accelerator member has been unactuated for a predetermined time, and
- said torque requested by said accelerator member exceeds said predetermined level (E) and
- the speed of the vehicle exceeds a predetermined level being lower than 10 km/h, advantageously lower than 7 km/h, and preferably 4 km/h - 7 km/h.

8. A method according to claim 7, **characterized in that** it comprises the step of applying a substantially constant weak braking action to said at least one wheel axle of the vehicle as long as
- said torque requested by the accelerator member is below a predetermined level (E) and at least one of said two conditions are fulfilled.

9. A method according to any one of claims 7-8, **characterized in that** it comprises the step of controlling said braking device (10) to automatically interrupt said weak braking action as soon as said torque requested exceeds said predetermined level (E) being lower than the level of a said torque required for getting said vehicle to start to move when standing on a horizontal ground and being fully loaded.

10. A method according to any one of claims 7-9, **characterized in that** it comprises the steps of
- detecting the actual total weight of the vehicle, and
- only controlling said braking device to apply a said weak braking action to at least one wheel axle of the vehicle if the total weight of the vehicle is below a predetermined level being substantially higher than the weight of said vehicle in unloaded state and lower than the weight of said vehicle in fully loaded state.

11. A method according to claim 10, **characterized in that** it comprises the step of making the intensity of said weak braking action depending upon the total weight of the vehicle by making said braking action increase with decreasing weight of the vehicle.

12. A method according to any of claims 7-11, **characterized in that** the operation of slowly manoeuvring of a motor vehicle having an automated mechanical transmission (AMT) as gearbox is controlled and it is sensed whether a gear has been selected or not by sensing a position of a shift actuating member, such as a shift lever (4) or a knob of said gearbox.

13. A computer program loadable into the internal memory of a computer, which computer program comprises computer program code for causing the computer, for a motor vehicle provided with an engine (2), a gearbox (3) associated with the engine, an accelerator member (8) adapted to be activated for requesting a torque to be transmitted from en output shaft of said gearbox to a drive shaft of the vehicle, a braking device (10) for applying a braking action to at least one wheel axle of the vehicle,:
- to obtain sensing of whether a gear of said gearbox (3) has been selected or not,
- to obtain measurement of the speed of the vehicle,
- to receive the actual position of said accelerator member (8),
- to determine said torque requested by said accelerator member (8), and
- to automatically control said braking device (10) to apply a weak braking action to at least one wheel axle of the vehicle when
- said torque requested by the accelerator member is below a predetermined level (E), and at least one of the following two-conditions is fulfilled:
- a lowest gear, reverse gear or a low range of said gearbox is selected, and
- the accelerator member is actuated, and
- to automatically control said braking device to interrupt said weak breaking action when at least one of the following conditions is fulfilled:
- no gear of the gearbox is selected,
- said accelerator member (8) has been unactuated for a predetermined time,
- said torque requested by said accelerator member exceeds said predetermined level (E), and
- the speed of the vehicle exceeds a predetermined level being lower than 10 km/h, advantageously lower than 7 km/h, and preferably 4 km/h - 7 km/h.

14. A computer program according to claim 13, **characterized in that** the computer comprises computer program code for causing the computer:
- to obtain application of a substantially constant weak braking action to said at least one wheel axle of the vehicle as long as
- said torque requested by the accelerator member is below a predetermined level (E) and at least one of said two conditions is fulfilled.

15. A computer program according to claim 13 or 14, **characterized in that** the computer program comprises computer program code for causing the computer:
- to control said braking device (10) to automatically interrupt said weak braking action as soon as said torque requested exceeds said predetermined level (E) being lower than the level of a said torque required for getting said vehicle to start to move when standing on a horizontal ground and being fully loaded.

16. A computer program according to any one of claims 13-15, **characterized in that** the computer program comprises computer program code for causing the computer:
- to control the operation of slowly manoeuvring of a motor vehicle having an automated mechanical transmission (AMT) as gearbox, and
- to obtain sensing of whether a gear has been selected or not by sensing a position of a shift actuating member, such as a shift lever or a knob, of said gearbox.

17. A computer program product comprising a data storage medium readable by an electronic unit, a computer program according to any one of claims 13-16 being stored on said data storage medium.

18. An electronic control unit comprising an execution means (20), a memory (22) connected to the execution means and a data storage medium (23) connected to the execution means, a computer program according to any of claims 13-16 being stored on said data storage medium.

## Patentansprüche

1. Vorrichtung zum Regeln des Betriebs eines langsam manövrierenden Kraftfahrzeugs mit:
- einem Motor (2),
- einem mit dem Motor verbundenen Getriebe (3),
- einem Beschleuniger (8), der zur Anforderung eines von der Abtriebswelle des Getriebes an eine Antriebswelle des Fahrzeugs abzugebenden Drehmoments ausgebildet ist,
- einer Bremsvorrichtung (10, 12) zum Aufbringen einer Bremswirkung an wenigstens einer Radachse des Fahrzeugs und
- einem Geschwindigkeitsmesser (17),
**dadurch gekennzeichnet, dass** die Vorrichtung umfasst:
- einen ersten Sensor (13) zum Feststellen, ob ein Gang des Getriebes ausgewählt worden ist oder nicht,
- einen zweiten Sensor (14) zum Ermitteln der Stellung des Beschleunigers,
- eine Einrichtung (15) zum Bestimmen des von dem Beschleuniger angeforderten Drehmoments und
- einen Bremskraftregler (16) zum automatischen Regeln der Bremsvorrichtung zum Aufbringen einer geringen Bremswirkung an wenigstens einer Radachse des Fahrzeugs wenn der erste und der zweite Sensor und die Einrichtung zum Bestimmen des Drehmoments angeben, dass
- das von dem Beschleuniger angeforderte Drehmoment unterhalb eines vorgegebenen Werts (E) liegt und
- dass wenigstens eine der beiden nachfolgenden Bedingungen erfüllt ist:
- ein niedrigster Gang, ein Rückwärtsgang oder ein unterer Bereich des Getriebes ist ausgewählt und
- der Beschleuniger ist betätigt,
- und zum automatischen Regeln der Bremsvorrichtung (10), um die geringe Bremswirkung zu unterbrechen, wenn wenigstens eine der folgenden vier Bedingungen erfüllt ist:
- es ist kein Gang des Getriebes (3) gewählt,
- der Beschleuniger (8) ist für eine vorgegebene Zeitspanne nicht betätigt worden,
- das vom Beschleuniger angeforderte Drehmoment übersteigt den vorgegebenen Wert (E) und
- die Geschwindigkeit des Fahrzeugs übersteigt einen vorgegebenen Wert, der kleiner als 10 km/h, vorteilhafterweise kleiner als 7 km/h ist und vorzugsweise 4 km/h bis 7 km/h beträgt.

2. Vorrichtung nach Anspruch ein 1, **dadurch gekennzeichnet, dass** der Bremskraftregler (16) zum Aufbringen einer im Wesentlichen konstanten geringen Bremswirkung an wenigstens einer Radachse des Fahrzeugs ausgebildet ist, solange als - das vom Beschleuniger angeforderte Drehmoment unter einem vorgegebenen Wert (E) liegt und wenigstens eine der genannten beiden Bedingungen erfüllt ist.

3. Vorrichtung nach einem der vorhergehenden Ansprüche, **dadurch gekennzeichnet, dass** der Bremskraftregler (16) zur Regelung der Bremsvorrichtung (10) zum automatischen Unterbrechen der geringen Bremswirkung ausgebildet ist, sobald das angeforderte Drehmoment einen vorgegebenen Wert (E) übersteigt, der geringer als der Wert eines für das Anfahren des Fahrzeugs erforderlichen Drehmoments ist, wenn es auf einem ebenen Grund steht und voll beladen ist.

4. Vorrichtung nach einem der vorhergehenden Ansprüche, **dadurch gekennzeichnet, dass** die Vorrichtung ferner umfasst eine Vorrichtung (18) zum Ermitteln des aktuellen Gesamtgewichts des Fahrzeugs und zum Abgeben von Informationen hierüber an den Bremskraftregler (16) und dass der Bremskraftregler nur zur Regelung der Bremsvorrichtung (10) zum Aufbringen der geringen Bremswirkung an wenigstens eine Radachse des Fahrzeugs, wenn das Gesamtgewicht des Fahrzeugs unter einem vorgegebenen Wert liegt, der wesentlich höher als das Gewicht des Fahrzeugs im unbeladenen Zustand und niedriger als das Gewicht des Fahrzeugs im voll beladenen Zustand ist.

5. Vorrichtung nach Anspruch 4, **dadurch gekennzeichnet, dass** der Bremsregler (16) derart ausgebildet ist, dass er die Stärke der geringen Bremswirkung vom Gesamtgewicht des Fahrzeugs abhängig macht, indem er die Bremswirkung mit abnehmendem Gewicht des Fahrzeugs erhöht.

6. Vorrichtung nach einem der vorhergehenden Ansprüche, die zum Regeln des Betriebs eines langsam manövrierenden Kraftfahrzeugs mit einem automatisierten Schaltgetriebe (AMT) als Getriebe ausgebildet ist, **dadurch gekennzeichnet, dass** der erste Sensor (13) zum Feststellen der Stellung eines Gangwahlhebels ausgebildet ist, wie einem Schalthebel (4) oder einem Schaltknopf des Schaltgetriebes.

7. Verfahren zum Regeln des Betriebs eines langsam manövrierenden Kraftfahrzeugs mit:
- einem Motor (2),
- einem mit dem Motor verbundenen Getriebe (3),
- einem Beschleuniger (8), der zur Anforderung eines von der Abtriebswelle des Getriebes an eine Antriebswelle des Fahrzeugs abzugebenden Drehmoments ausgebildet ist und
- einer Bremsvorrichtung (10, 12) zum Aufbringen einer Bremswirkung an wenigstens einer Radachse des Fahrzeugs,
**dadurch gekennzeichnet, dass** das Verfahren die Schritte umfasst:
- Feststellen, ob ein Gang des Getriebes gewählt worden ist oder nicht,
- Messen der Geschwindigkeit des Fahrzeugs,
- Ermitteln der aktuellen Position des Beschleunigers,
- Bestimmen des von dem Beschleuniger angeforderten Drehmoments und
- automatisches Regeln der Bremsvorrichtung (10) zum Aufbringen einer geringen Bremswirkung an wenigstens einer Radachse des Fahrzeugs, wenn
- das von dem Beschleuniger angeforderte Drehmoment geringer als ein vorgegebener Wert (E) ist und wenigstens eine der nachfolgenden beiden Bedingungen erfüllt ist:
- der niedrigste Gang, der Rückwärtsgang oder ein unterer Bereich des Getriebes ist ausgewählt und
- der Beschleuniger ist betätigt, sowie
- automatisches Regeln der Bremsvorrichtung (10) zum Unterbrechen der geringen Bremswirkung wenn wenigstens eine der folgenden vier Bedingungen erfüllt ist:
- kein Gang des Getriebes ist gewählt,
- der Beschleuniger ist über eine vorgegebene Zeitspanne nicht betätigt worden und
- das vom Beschleuniger angeforderte Drehmoment übersteigt den vorgegebenen Wert (E) und
- die Geschwindigkeit des Fahrzeugs übersteigt einen vorgegebenen Wert von weniger als 10 km/h, vorteilhafterweise weniger als 7 km/h und vorzugsweise von 4 km/h bis 7 km/h.

8. Verfahren nach Anspruch 7, **dadurch gekennzeichnet, dass** es einen Schritt umfasst: Aufbringen einer im Wesentlichen konstanten geringen Bremswirkung an wenigstens einer Radachse des Fahrzeugs, solange
- das vom Beschleuniger angeforderte Drehmoment geringer als der vorbestimmte Wert (E) ist und wenigstens eine der genannten beiden Bedingungen erfüllt ist.

9. Verfahren nach einem der Ansprüche 7 oder 8, **dadurch gekennzeichnet, dass** es den Schritt der Regelung der Bremsvorrichtung (10) zum automatischen Unterbrechen der geringen Bremswirkung umfasst, sobald das angeforderte Drehmoment einen vorgegebenen Wert (E) übersteigt, der geringer als der Wert eines für das Anfahren des Fahrzeugs erforderlichen Drehmoments ist, wenn es auf einem ebenen Grund steht und voll beladen ist.

10. Verfahren nach einem der Ansprüche 7 bis 9, **dadurch gekennzeichnet, dass** es die Schritte umfasst:
- Ermitteln des aktuellen Gesamtgewichts des Fahrzeugs, und
- Regeln der Bremsvorrichtung (10) zum Aufbringen der geringen Bremswirkung an wenigstens einer Radachse des Fahrzeugs nur dann, wenn das Gesamtgewicht des Fahrzeugs unter einem vorgegebenen Wert liegt, der wesentlich höher als das Gewicht des Fahrzeugs im unbeladenen Zustand und niedriger als das Gewicht des Fahrzeugs im voll beladenen Zustand ist.

11. Verfahren nach Anspruch 10, **dadurch gekennzeichnet, dass** es den Schritt umfasst, die Stärke der geringen Bremswirkung vom Gesamtgewicht des Fahrzeugs abhängig zu machen, indem die Bremswirkung mit abnehmendem Gewicht des Fahrzeugs erhöht wird.

12. Verfahren nach einem der Ansprüche 7 bis 11, **dadurch gekennzeichnet, dass** der Betrieb des langsamen Manövrierens eines Kraftfahrzeugs mit automatisiertem Schaltgetriebe (ATM) als Getriebe geregelt wird und festgestellt wird, ob ein Gang ausgewählt worden ist oder nicht, durch Bestimmen der Stellung eines Gangwahlhebels, wie einem Schalthebel (4) oder einem Schaltknopf des Schaltgetriebes.

13. Computerprogramm, das in den internen Arbeitsspeicher eines Computers geladen werden kann, welches Computerprogramm einen Computerprogrammcode umfasst, der bei einem Kraftfahrzeug mit einem Motor (2), einen mit dem Motor verbundenen Getriebe (3), einem Beschleuniger (8), der zur Anforderung eines von der Abtriebswelle des Getriebes an eine Antriebswelle des Fahrzeugs abzugebenden Drehmoments ausgebildet ist, und einer Bremsvorrichtung (10, 12) zum Aufbringen einer Bremswirkung an wenigstens einer Radachse des Fahrzeugs bewirkt,
- wobei festgestellt wird, ob ein Gang des Getriebes (3) ausgewählt worden ist oder nicht,
- wobei die Messung der Geschwindigkeit des Fahrzeugs durchgeführt wird,
- wobei die aktuelle Position des Beschleunigers (8) bestimmt wird und
- dass die Bremsvorrichtung (10) automatisch geregelt wird, um eine geringe Bremswirkung an wenigstens einer Radachse des Fahrzeugs aufzubringen, wenn
- das von dem Beschleuniger angeforderte Drehmoment unterhalb eines vorgegebenen Werts (E) liegt und wenigstens eine der beiden nachfolgenden Bedingungen erfüllt ist:
- ein niedrigster Gang, ein Rückwärtsgang oder ein unterer Bereich des Getriebes ist ausgewählt und
- der Beschleuniger ist betätigt,
und dass die Bremsvorrichtung (10) automatisch geregelt wird, um die geringe Bremswirkung zu unterbrechen, wenn wenigstens eine der folgenden vier Bedingungen erfüllt ist:
- es ist kein Gang des Getriebes (3) gewählt,
- der Beschleuniger (8) ist für eine vorgegebene Zeitspanne nicht betätigt worden,
- das vom Beschleuniger angeforderte Drehmoment übersteigt den vorgegebenen Wert (E) und
- die Geschwindigkeit des Fahrzeugs übersteigt einen vorgegebenen Wert, der kleiner als 10 km/h, vorteilhafterweise kleiner als 7 km/h ist und vorzugsweise 4 km/h bis 7 km/h beträgt.

14. Computerprogramm nach Anspruch 13, **dadurch gekennzeichnet, dass** der Computer einen Computerprogrammcode umfasst, der den Computer veranlasst:
- das Aufbringen einer im Wesentlichen konstanten geringen Bremswirkung an wenigstens einer Radachse des Fahrzeugs, solange
- das vom Beschleuniger angeforderte Drehmoment geringer als ein vorgegebener Wert (E) ist und wenigstens eine der beiden genannten Bedingungen erfüllt ist.

15. Computerprogramm nach Anspruch 13 oder 14, **dadurch gekennzeichnet, dass** der Computer einen Computerprogrammcode umfasst, der den Computer veranlasst:
- die Bremsvorrichtung (10) zu regeln, um die geringe Bremswirkung zu unterbrechen, sobald das angeforderte Drehmoment den vorgegebenen Wert (E) zu übersteigt, der geringer als der Wert eines für das Anfahren des Fahrzeugs erforderlichen Drehmoments ist, wenn es auf einem ebenen Grund steht und voll beladen ist.

16. Computerprogramm nach einem der Ansprüche 13 bis 15, **dadurch gekennzeichnet, dass**
der Computer einen Computerprogrammcode umfasst, der den Computer veranlasst:
- den Betrieb eines langsam manövrierenden Kraftfahrzeugs mit einem automatisierten Schaltgetriebe (ATM) als Getriebe zu regeln und
- festzustellen, ob ein Gang ausgewählt worden ist oder nicht durch Bestimmen der Stellung eines Gangwahlhebels, wie eines Schalthebels (4) oder eines Schaltknopfs des Schaltgetriebes.

17. Computerprogrammprodukt, das ein durch ein elektronisches Gerät lesbares Datenspeichermedium mit einen Computerprogramm nach einem der Ansprüche 13 bis 16 umfasst, das auf dem Datenspeichermedium gespeichert ist.

18. Elektronische Regeleinrichtung eine Ausführungseinrichtung (20), einen mit der Ausführungseinrichtung verbundenen Speicher (22) und ein mit der Ausführungseinrichtung verbundenes Datenspeichermedium (23), auf dem ein Computerprogramm nach einem der Ansprüche 13 bis 16 Datenspeichermedium gespeichert ist, umfasst.

## Revendications

1. Système de commande d'une opération de manoeuvre lente d'un véhicule à moteur comprenant :
- un moteur (2),
- une boîte de vitesses (3) associée au moteur,
- un organe accélérateur (8) destiné à être actionné pour demander la transmission d'un couple d'un arbre de sortie de ladite boîte de vitesses à un arbre de transmission du véhicule,
- un dispositif de freinage (10, 12) pour appliquer une action de freinage à au moins un essieu de roue du véhicule, et
- un indicateur de vitesse (17), **caractérisé en ce que** le système comprend un premier capteur (13) destiné à détecter si un rapport de ladite boîte de vitesses a été sélectionné ou non, un second capteur (14) destiné à détecter la position réelle dudit organe accélérateur, un moyen (15) conçu pour déterminer ledit couple demandé par ledit organe accélérateur et un moyen de commande de freinage (16) conçu pour commander automatiquement ledit dispositif de freinage pour application d'une action de freinage faible à au moins un essieu de roue du véhicule lorsque lesdits premier et second capteurs et ledit moyen de détermination de couple indiquent que
- ledit couple demandé par l'organe accélérateur est en dessous d'un niveau prédéterminé (E) et qu'au moins l'une des deux conditions suivantes est remplie:
- une première vitesse, une marche arrière ou une gamme basse de ladite boîte de vitesses est sélectionnée, et
- l'organe accélérateur est actionné,
et pour commander automatiquement ledit dispositif de freinage (10) pour une interruption de ladite action de freinage faible lorsqu'au moins l'une des quatre conditions suivantes est remplie :
- aucun rapport de la boîte de vitesses (3) n'est sélectionné,
- ledit organe accélérateur (8) a été désactivé pour une durée prédéterminée,
- ledit couple demandé par ledit organe accélérateur dépasse ledit niveau prédéterminé (E), et
- la vitesse du véhicule dépasse un niveau prédéterminé inférieur à 10 km/h, avantageusement inférieur à 7 km/h, et préférablement compris entre 4 km/h et 7 km/h.

2. Système selon la revendication 1, **caractérisé en ce que** ledit moyen de commande de freinage (16) est conçu pour appliquer une action de freinage faible sensiblement constante audit au moins un essieu de roue du véhicule tant que
- ledit couple demandé par l'élément accélérateur est en dessous d'un niveau prédéterminé (E) et qu'au moins l'une desdites deux conditions est remplie.

3. Système selon l'une quelconque des revendications précédentes, **caractérisé en ce que** ledit moyen de commande de freinage (16) est conçu pour commander ledit dispositif de freinage (10) pour une interruption automatique de ladite action de freinage faible dès que ledit couple demandé dépasse un dit niveau prédéterminé (E) qui est inférieur au niveau d'undit couple requis pour obtenir la mise en mouvement dudit véhicule lorsque celui-ci se trouve sur un sol horizontal et est à l'état entièrement chargé.

4. Système selon l'une quelconque des revendications précédentes, **caractérisé en ce que** le système comprend, en outre, un moyen (18) conçu pour détecter le poids total réel du véhicule et fournir les informations correspondantes audit moyen de commande de freinage (16) et **en ce que** ledit moyen de commande de freinage est conçu pour uniquement commander ledit dispositif de freinage (10) pour application d'une dite action de freinage faible à au moins un essieu de roue du véhicule si le poids total du véhicule est inférieur à un niveau prédéterminé qui est sensiblement supérieur au poids dudit véhicule à l'état déchargé et inférieur au poids dudit véhicule à l'état entièrement chargé.

5. Système selon la revendication 4, **caractérisé en ce que** ledit moyen de commande de freinage (16) est conçu pour rendre l'intensité de ladite action de freinage faible dépendante du poids total du véhicule en faisant augmenter ladite action de freinage au fur et à mesure que diminue le poids du véhicule.

6. Système selon l'une quelconque des revendications précédentes, le système étant conçu pour commander l'opération de manoeuvre lente d'un véhicule à moteur doté d'une transmission mécanique automatisée (AMT) en tant que boîte de vitesses, **caractérisé en ce que** ledit premier capteur (13) est conçu pour détecter une position d'un organe actionneur de changement de vitesse, tel qu'un levier de changement de vitesse (4) ou un bouton, de ladite boîte de vitesses.

7. Procédé de commande d'une opération de manoeuvre lente d'un véhicule à moteur, comprenant :
- un moteur (2),
- une boîte de vitesses (3) associée au moteur,
- un organe accélérateur (8) destiné à être actionné pour demander la transmission d'un couple d'un arbre de sortie de ladite boîte de vitesses à un arbre de transmission du véhicule,
- un dispositif de freinage (10, 12) pour appliquer une action de freinage à au moins un essieu de roue du véhicule, **caractérisé en ce que** le procédé comprend les étapes suivantes :
- détecter si un rapport de ladite boîte de vitesses a été sélectionné ou non,
- mesurer la vitesse du véhicule,
- détecter la position réelle dudit organe accélérateur,
- déterminer ledit couple demandé par ledit élément accélérateur, et
- commander automatiquement ledit dispositif de freinage (10) pour application d'une action de freinage faible à au moins un essieu de roue du véhicule lorsque
- ledit couple demandé par l'organe accélérateur est en dessous d'un niveau prédéterminé (E) et qu'au moins l'une des deux conditions suivantes est remplie:
- une première vitesse, une marche arrière ou une gamme basse de ladite boîte de vitesses est sélectionnée, et
- l'organe accélérateur est actionné, et
- pour commander automatiquement ledit dispositif de freinage (10) pour une interruption de ladite action de freinage faible lorsqu'au moins l'une des quatre conditions suivantes est remplie :
- aucun rapport de la boîte de vitesses n'est sélectionné,
- ledit organe accélérateur a été désactivé pour une durée prédéterminée, et
- ledit couple demandé par ledit organe accélérateur dépasse ledit niveau prédéterminé (E), et
- la vitesse du véhicule dépasse un niveau prédéterminé inférieur à 10 km/h, avantageusement inférieur à 7 km/h, et préférablement à 4 km/h - 7 km/h.

8. Procédé selon la revendication 7, **caractérisé en ce qu'**il comprend l'étape consistant à appliquer une action de freinage faible sensiblement constante audit au moins un essieu de roue du véhicule tant que
- ledit couple demandé par l'élément accélérateur est en dessous d'un niveau prédéterminé (E) et qu'au moins l'une desdites deux conditions est remplie.

9. Procédé selon l'une quelconque des revendications 7 à 8, **caractérisé en ce qu'**il comprend l'étape consistant à commander ledit dispositif de freinage (10) pour une interruption automatique de ladite action de freinage faible dès que ledit couple demandé dépasse ledit niveau prédéterminé (E) qui est inférieur au niveau d'undit couple requis pour obtenir la mise en mouvement dudit véhicule lorsque celui-ci se trouve sur un sol horizontal et à l'état entièrement chargé.

10. Procédé selon l'une quelconque des revendications 7 à 9, **caractérisé en ce qu'**il comprend les étapes suivantes :
- détecter le poids total réel du véhicule, et
- uniquement commander ledit dispositif de freinage pour application d'une dite action de freinage faible à au moins un essieu de roue du véhicule si le poids total du véhicule est inférieur à un niveau prédéterminé qui est sensiblement supérieur au poids dudit véhicule à l'état déchargé et inférieur au poids dudit véhicule à l'état entièrement chargé.

11. Procédé selon la revendication 10, **caractérisé en ce qu'**il comprend l'étape consistant à rendre l'intensité de ladite action de freinage faible dépendante du poids total du véhicule en faisant augmenter ladite action de freinage au fur et à mesure que diminue le poids du véhicule.

12. Procédé selon l'une quelconque des revendications 7 à 11, **caractérisé en ce que** l'opération de manoeuvre lente d'un véhicule à moteur doté d'une transmission mécanique automatisée (AMT) en tant que boîte de vitesses est commandée et **en ce qu'**il est détecté si un rapport a été sélectionné ou non en détectant une position d'un organe actionneur de changement de vitesse, tel qu'un levier de changement de vitesse (4) ou un bouton de ladite boîte de vitesses.

13. Programme informatique chargeable dans la mémoire interne d'un ordinateur, lequel programme informatique comprend un code de programme informatique permettant à l'ordinateur, pour un véhicule à moteur pourvu d'un moteur (2), d'une boîte de vitesses (3) associée au moteur, d'un organe accélérateur (8) conçu pour être activé afin de demander la transmission d'un couple d'un arbre de sortie de ladite boîte de vitesses à un arbre de transmission du véhicule, d'un dispositif de freinage (10) destiné à appliquer une action de freinage à au moins un essieu de roue du véhicule :
- d'obtenir la détection de la sélection ou non d'un rapport de ladite boîte de vitesses (3),
- d'obtenir la mesure de la vitesse du véhicule,
- de recevoir la position réelle dudit organe accélérateur (8),
- de déterminer ledit couple demandé par ledit organe accélérateur (8), et
- de commander automatiquement ledit dispositif de freinage (10) pour application d'une action de freinage faible sur au moins un essieu du véhicule lorsque
- ledit couple demandé par l'organe accélérateur est en dessous d'un niveau prédéterminé (E), et au moins l'une des deux conditions suivantes est remplie :
- une première vitesse, une marche arrière ou une gamme basse de ladite boîte de vitesses est sélectionnée, et
- l'organe accélérateur est actionné, et
- de commander automatiquement ledit dispositif de freinage pour une interruption de ladite action de freinage faible lorsqu'au moins l'une des conditions suivantes est remplie :
- aucun rapport de la boîte de vitesses n'est sélectionné,
- ledit organe accélérateur (8) a été désactivé pour une durée prédéterminée,
- ledit couple demandé par ledit organe accélérateur dépasse ledit niveau prédéterminé (E), et
- la vitesse du véhicule dépasse un niveau prédéterminé inférieur à 10 km/h, avantageusement inférieur à 7 km/h, et préférablement compris entre 4 km/h et 7 km/h.

14. Programme informatique selon la revendication 13, **caractérisé en ce que** le calculateur comprend un code de programme informatique permettant à l'ordinateur :
- d'obtenir l'application d'une action de freinage faible sensiblement constante audit au moins un essieu de roue du véhicule tant que
- ledit couple demandé par l'organe accélérateur est en dessous d'un niveau prédéterminé (E) et au moins l'une desdites deux conditions est remplie.

15. Programme informatique selon la revendication 13 ou 14, **caractérisé en ce que** le programme comprend un code de programme informatique permettant à l'ordinateur :
- de commander ledit dispositif de freinage (10) pour une interruption automatique de ladite action de freinage faible dès que ledit couple demandé dépasse ledit niveau prédéterminé (E) qui est inférieur au niveau d'undit couple requis pour obtenir la mise en mouvement dudit véhicule lorsque celui-ci se trouve sur un sol horizontal et à l'état entièrement chargé.

16. Programme informatique selon l'une quelconque des revendications 13 à 15, **caractérisé en ce que** le programme informatique comprend un code de programme informatique permettant à l'ordinateur :
- de commander l'opération de manoeuvre lente d'un véhicule à moteur doté d'une transmission mécanique automatisée (AMT) en tant que boîte de vitesses,
- d'obtenir la détection de la sélection ou non d'un rapport en détectant une position d'un organe actionneur de changement de vitesse, tel qu'un levier de changement de vitesse ou un bouton, de ladite boîte de vitesses.

17. Produit programme informatique comprenant un support de stockage de données lisible par une unité électronique, un programme informatique selon l'une quelconque des revendications 13 à 16 étant stocké sur ledit support de stockage de données.

18. Unité de commande électronique comprenant un moyen d'exécution (20), une mémoire (22) reliée au moyen d'exécution et un support de stockage de données (23) relié au moyen d'exécution, un programme informatique selon l'une quelconque des revendications 13 à 16 étant stocké sur ledit support de stockage de données.
